# EUROPÄISCHE PATENTSCHRIFT

(11) **EP 3 326 861 B1**
(45) Veröffentlichungstag und Bekanntmachung des Hinweises auf die Patenterteilung: **15.07.2020**
(21) Anmeldenummer: 16200223.2
(22) Anmeldetag: 23.11.2016
(51) Int. Cl.: B60P 7/14

(54) **LADUNGSSICHERUNGSVORRICHTUNG**
DEVICE FOR SECURING LOADS
DISPOSITIF D'ARRIMAGE DE CHARGEMENT

(43) Veröffentlichungstag der Anmeldung: 30.05.2018
(73) Patentinhaber: H.P. Beck & Söhne AG, 3424 Oberösch (CH)
(72) Erfinder: Beck, Markus, 3400 Burgdorf (CH)
(74) Vertreter: Keller & Partner Patentanwälte AG

(56) Entgegenhaltungen:
- DE-U1-202013 005 936
- DE-U1-202013 105 357
- DE-U1-202014 102 306
- GB-A- 2 498 420
- US-A- 4 052 083

## Beschreibung

### Technisches Gebiet

Die Erfindung betrifft eine Vorrichtung zur lateralen Sicherung einer Ladung in einem Laderaum eines Fahrzeuges, insbesondere eines Anhängers, umfassend den Laderaum und mindestens ein Sicherungselement zur Sicherung der Ladung im Laderaum. Das Sicherungselement ist von einer ersten Position in eine zweite Position, zum Halten der Ladung, verfahrbar.

### Stand der Technik

Wird eine Ladung auf einem Fahrzeug auf öffentlichen und privaten Verkehrswegen transportiert, muss diese gesichert werden, damit sie sich während der Fahrt nicht lösen kann und eine Gefährdung des Strassenverkehrs vermieden werden kann.

In der Landwirtschaft werden Ladungen, welche beispielsweise Quaderballen, Rundballen, Transportpaletten wie Paloxen oder Holzkisten umfassen, häufig auf einem Transportfahrzeug wie einem Anhänger transportiert. Ein solcher Anhänger weist im Allgemeinen in seiner Längsachse in Fahrtrichtung gesehen an einem vorderen Ende und an einem hinteren Ende des Anhängers zwei stirnseitige Wände auf. Des Weiteren umfasst der Anhänger zwei parallel zur Längsachse ausgerichtete Seitenwände. Diese Seitenwände sind in der Regel verschwenkbar, so dass wahlweise von aussen auf die Ladefläche bzw. den Laderaum des Transportfahrzeugs zugegriffen werden kann, um das Transportfahrzeug zu beladen oder zu entladen. Während der Fahrt des Transportfahrzeuges ist der Laderaum durch die Seitenwände abgeschlossen, so dass sich die Ladung während der Fahrt nicht vom Transportfahrzeug lösen kann. Wünschenswert ist dabei eine Ladungssicherung, die sicherstellt, dass die Ladung in jeder denkbaren Verkehrssituation, insbesondere auch bei einem Unfall, im Laderaum bleibt, so dass eine Gefährdung des Strassenverkehrs ausgeschlossen ist.

Aus dem Stand der Technik sind unterschiedliche Vorrichtungen zum Sichern einer Ladung auf einem Fahrzeug bekannt. So offenbart beispielsweise die DE 10 2007 020 735 (Krassort) einen Transportwagen für Stückgut mit Seitenwänden, wobei die Seitenwände zwischen einer Transportstellung und einer Offenstellung verstellbar sind. Um von der Transportstellung in die Offenstellung wechseln zu können, werden die Seitenwände mittels eines Lenkparallelograms seitlich nach unten verschoben, um die Ladefläche des Transportwagens freizugeben. Um in die Transportstellung zu wechseln, werden die Seitenwände von unten nach oben verschoben.

Eine andere Ladungssicherungsvorrichtung offenbart die DE 20 2014 102 306 (Fliegl). Bei dieser umfasst das Transportfahrzeug zwei Seitenwände, die mittels eines Hydraulikzylinders nach oben geschwenkt werden können. Dank einer Tragstruktur, die eine Parallelogramm-Kinematik ermöglicht, können die Seitenwände beim Verfahren nicht ausschliesslich nach oben, sondern jeweils auch in Querrichtung bewegt werden. Dies erfolgt ausgehend von der geschlossenen Stellung zunächst nach aussen, d.h. weg von der Ladefläche. Beim weitergehenden Öffnen erfolgt dann eine Bewegung der Seitenwände mit einer Bewegungskomponente in Querrichtung nach innen, d.h. in den oberhalb der Ladeplattform angeordneten Raum. Dadurch kann das Transportfahrzeug mit Stückgut unterschiedlicher Beladungshöhe beladen werden. Zudem ist die Beladung und Entladung auch in beengten Platzverhältnissen möglich.

Die DE 91 13 503 (AVU) offenbart ein Transportanhänger mit einer Ladefläche mit einem stirnseitigen und rückseitigen Aufbau, zwischen denen sich ein Dach erstreckt, und mit seitlichen, an dem Dach befestigten Planen. Das Dach ist zusammen mit den Planen gegenüber der Ladefläche mit Hilfe von zwei Hydraulikzylindern anhebbar. Durch das Anheben des Daches wird der Laderaum oberhalb der Ladefläche freigegeben und erlaubt so das ungehinderte Beladen von der Seite her. Nach dem Beladen wird das Dach wieder abgesenkt.

Die aus dem Stand der Technik bekannten Vorrichtungen zum Sichern einer Ladung auf einem Fahrzeug haben den Nachteil, dass die Ladung durch die Seitenwände nur ungenügend gesichert werden kann. So ist beispielsweise nicht sichergestellt, dass sich im Falle eines Unfalls die Ladung nicht vom Transportfahrzeug lösen kann. Insbesondere können Ladungen, deren Dimensionen kleiner oder grösser als die Ladefläche sind, mit bekannter Vorrichtung zum Sichern einer Ladung nicht vollständig gehalten werden. Es ist zudem nicht oder nur in ungenügendem Ausmasse möglich, die Vorrichtung an die Dimensionen der Ladung anzupassen und somit die Ladung im Laderaum gegen eine unerwünschte Verschiebung innerhalb des Laderaums zuverlässig zu sichern.

Dokument US 4 052 083 A1 offenbart eine Vorrichtung zur lateralen Sicherung der Ladung in einem Laderaum gemäß dem Oberbegriff des Anspruchs 1.

### Darstellung der Erfindung

Aufgabe der Erfindung ist es, eine dem eingangs genannten technischen Gebiet zugehörende Vorrichtung zu schaffen, die Ladungen unterschiedlicher Dimensionen in einem Laderaum eines Fahrzeuges zuverlässig sichern kann.

Die Lösung der Aufgabe ist durch die Merkmale des Anspruchs 1 definiert. Gemäss der Erfindung befindet sich die zweite Position des Sicherungselements innerhalb des Laderaums und das Sicherungselement ist von einem Randbereich des Laderaums nach innen zur Mitte des Laderaums hin in die zweite Position des Sicherungselements verfahrbar.

Die Vorrichtung ist in einer ersten Achse durch einen stirnseitigen Abschluss begrenzt und in einer zweiten Achse durch einen lateralen Abschluss begrenzt. Als Referenzsystem für die erfindungsgemässe Vorrichtung wird im vorliegenden Text ein Referenzsystem eines fiktives Fahrzeuges verwendet. Dabei wird angenommen, dass die Vorrichtung auf dem fiktiven Fahrzeug montiert ist. In diesem Referenzsystem entspricht die erste Achse der Längsachse des fiktiven Fahrzeuges, wobei die Längsachse parallel zur Fahrtrichtung des Fahrzeuges ausgerichtet ist, während die zweite Achse der quer zur Längsachse ausgerichteten Querachse des Fahrzeuges entspricht. Die Querachse muss aber nicht genau rechtwinklig zur Längsachse des Fahrzeuges orientiert sein. Ihre Ausrichtung kann auch etwas von einem rechten Winkel abweichen. Im vorliegenden Text nehmen auch Begriffe, welche das Wort "Fahrzeug" nicht enthalten, Bezug auf das Referenzsystem des Fahrzeuges. So beziehen sich die Begriffe "vorne", "hinten", "oben", "unten" sowie "seitlich" auch auf "vorne", "hinten", "oben", "unten" sowie "seitlich" des Fahrzeuges, wobei sich "vorne" und "hinten" in Bezug auf die übliche Fahrtrichtung des Fahrzeuges beziehen. Der Begriff "lateral" bezieht sich auf eine Richtung entlang der Querachse des Fahrzeuges, während sich der Begriff "stirnseitig" auf eine Anordnung entlang der Längsachse des Fahrzeuges bezieht. Genauso beziehen sich die Begriffe "horizontal" und "vertikal" auf das Fahrzeug, wobei "horizontal" in einer Ebene parallel zu einer Ladefläche des Fahrzeugs liegend und "vertikal" senkrecht zu dieser Ebene ausgerichtet bedeutet.

Der "Laderaum" ist der Raum in dem die Ladung üblicherweise transportiert wird. Die Höhe des Laderaums ist bevorzugt die Höhe, bis zu der das Fahrzeug beladen werden kann. Vorzugsweise entspricht die Grundfläche des Laderaums der Ladefläche, auf der sich die Ladung befinden kann. Vorzugsweise ist der Laderaum im Wesentlichen quaderförmig. Der Begriff "Randbereich" des Laderaums umfasst sämtliche Bereiche am Rand des Laderaums. Der "Randbereich" kann sich also auf den Bereich einer gedachten laderaumbegrenzenden Fläche, auf den Bereich einer Kante zwischen zwei gedachten laderaumbegrenzenden Flächen oder auf den Bereich einer Ecke zwischen drei gedachten laderaumbegrenzenden Flächen beziehen.

Unter dem Begriff "Sicherung" ist ein Verhindern einer unerwünschten Bewegung der Ladung zu verstehen. Die Ladung soll durch die Sicherung in der Position verbleiben, in welche die Ladung beim Beladen gebracht wurde. Mit anderen Worten verhindert die "Sicherung" der Ladung ein unerwünschtes Bewegen der Ladung relativ zur Ladefläche des Laderaums zumindest in einer Richtung. Die Sicherung der Ladung kann dabei sowohl nur formschlüssig oder nur kraftschlüssig wie auch durch eine Kombination von form- und kraftschlüssiger Sicherung erfolgen. Die Ladung kann also mittels der Form des Sicherungselements, an einer Bewegung gehindert werden. Es besteht aber auch die Möglichkeit, dass eine Kraft auf die Ladung einwirkt, um eine Bewegung der Ladung zu vermeiden und die Ladung an Ort und Stelle zu halten.

Die erste Position des Sicherungselements befindet sich vorzugsweise ausserhalb des Laderaums oder in einem Randbereich des Laderaums. Die zweite Position des Sicherungselements befindet sich innerhalb des Laderaums. Dabei ist unerheblich, ob sich in der zweiten Position ein kleiner Teil oder einzelne Elemente des Sicherungselements ausserhalb des Laderaums befinden, solange sich der grösste Teil des Sicherungselements in seiner zweiten Position innerhalb des Laderaums befindet. Die zweite Position des Sicherungselements kann vertikal und horizontal oder nur vertikal oder nur horizontal von der ersten Position beabstandet sein. Das Sicherungselement ist von einem Randbereich des Laderaums nach innen zur Mitte des Laderaums hin in seine zweite Position verfahrbar. Dabei entspricht vorzugsweise die Strecke vom Randbereich des Laderaums zur zweiten Position des Sicherungselements einem Teil des Verstellwegs zwischen seiner ersten Position und seiner zweiten Position. Somit befindet sich vorzugsweise das Sicherungselement im Randbereich des Laderaums in einer dritten Position, die innerhalb des Verstellwegs zwischen der ersten Position und der zweiten Position des Sicherungselements liegt.

Der Begriff "Ladung" umfasst alle transportierbaren Gegenstände, die nicht zur Vorrichtung gehören und nicht Bestandteil des Fahrzeuges sind. Objekte zum Sichern der Ladung wie beispielsweise textile Abdeckungen oder Spangurten gehören nicht zur Ladung. Als Ladung sind beispielsweise Kisten, Ballen, Transportpaletten wie Paloxen, Behältnisse, Erntegut oder Baumaterial zu verstehen.

Der Begriff "Sicherungselement" umfasst alle Elemente, die zur Sicherung einer Ladung geeignet sind. Das Sicherungselement kann somit beispielsweise als Stange, Gitter, Wand, Gurten oder Plane ausgebildet sein. Vorzugsweise ist das Sicherungselement aus einem steifen Material wie beispielsweise einem Metall wie Stahl oder Aluminium, aber auch aus einem Kunststoff oder einem geeigneten Verbundmaterial gefertigt. Bevorzugt ist das Sicherungselement in der Form eines Gitters aus Metall oder in der Form eines Gitters aus beweglichen Gurten ausgebildet.

Die erfindungsgemässe Vorrichtung zur lateralen Sicherung einer Ladung hat den Vorteil, dass auch eine Ladung, die in lateraler Richtung eine kleinere Dimension aufweist als die Dimension des Laderaums in lateraler Richtung, zuverlässig durch das Sicherungselement gesichert werden kann. Die Ladung kann dadurch in zuverlässiger Weise an einer unerwünschten Bewegung während der Fahrt des Fahrzeuges gehindert werden.

Da das Sicherungselement sich in seiner zweiten Position innerhalb des Laderaums befindet, kann die zweite Position des Sicherungselements an die laterale Dimension der Ladung, also an die Dimension der Ladung in Querrichtung, angepasst werden. Das erlaubt auch eine zuverlässige Sicherung von kleinen und schmalen Ladungen, deren Dimension in Querrichtung wesentlich kleiner ist als die Dimension des Laderaums und der Ladefläche in Querrichtung. Damit können die Sicherheitsvorschriften für den Strassenverkehr vollständig eingehalten werden. Dadurch, dass die zweite Position des Sicherungselements in lateraler Richtung an die Dimension der Ladung anpassbar ist, kann sichergestellt werden, dass auch in einer Gefahrensituation, bei starken Schwingungen und ruckartigen Bewegungen, bei einer Schräglage des Fahrzeuges oder bei einem Unfall, wenn das Fahrzeug zur Seite kippt, die Ladung durch das Sicherungselement meistgehalten werden kann. Insbesondere für den letzteren Fall, aber auch generell besteht die Möglichkeit, die Ladung respektive das Transportgut durch ein Sicherungselement oder zwischen zwei gegenüberliegenden Sicherungselementen kraftschlüssig einzuklemmen. Das erhöht die Sicherheit im Strassenverkehr.

Des Weiteren kann durch das zuverlässige Sichern der Ladung sichergestellt werden, dass sich die Ladung während der Fahrt nicht in unerwünschtem Ausmasse bewegt und sich damit der Massenschwerpunkt während der Fahrt verändert, was das Führen des Fahrzeuges erheblich erschweren würde und zu gefährlichen Situationen im Verkehr führen könnte.

Das Sicherungselement ist vorzugsweise von seiner ersten Position parallel in seine zweite Position verfahrbar. Dabei ist unerheblich, wie das Sicherungselement im Raum ausgerichtet ist, solange die Ausrichtung in der ersten Position der Ausrichtung des Sicherungselements in der zweiten Position entspricht und das Sicherungselement parallel verfahrbar ist. Das bedeutet, dass sich die Ausrichtung des Sicherungselements während dem Verstellen von seiner ersten Position in seine zweite Position und zurück vorzugsweise nicht ändert, so dass bevorzugt jeder Punkt des Sicherungselements in derselben Richtung und um dieselbe Strecke verschoben wird, so dass das Sicherungselement mittels Parallelverschiebung verfahren wird. Dem Fachmann ist jedoch klar, dass eine Parallelverschiebung auch durch eine weitere Bewegung quer zur Parallelverschiebungsrichtung überlagert sein kann, so dass das Sicherungselement sich auch entlang einer Raumkurve bewegen kann. Dadurch, dass das Sicherungselement parallel bewegbar ist wird erreicht, dass in der zweiten Position das Sicherungselement derart ausgerichtet sein kann, dass eine Ladung im Laderaum gesichert werden kann. Vorzugsweise ist das Sicherungselement als Gitter ausgebildet, welches vertikale in Längsrichtung des Gitters voneinander beabstandete Stäbe umfasst. Bevorzugt ist das Sicherungselement in seiner ersten und zweiten Position vertikal ausgerichtet. Das hat den Vorteil, dass die Ladung besonders gut durch das Sicherungselement gehalten werden kann, da das Sicherungselement die Ladung in dieser Lage gut erfassen kann.

Die Vorrichtung der Erfindung umfasst mindestens zwei Stützen und mindestens zwei Arme, wobei die mindestens zwei Arme je schwenkbar an einer Stütze gelagert sind und das Sicherungselement insbesondere schwenkbar zwischen den zwei Armen gelagert ist. Durch die schwenkbare Lagerung kann das Sicherungselement auf einfache Art und Weise und rasch von seiner ersten Position in seine zweite Position und zurück bewegt werden.

Dabei ist es unerheblich, ob die Stützen die Arme in einem vertikalen Abstand zur Ladefläche des Laderaums lagern, oder ob die Arme durch die Stützen auf der gleichen vertikalen Höhe wie die Ladefläche gelagert sind. Die Lagerung der Arme an der Stütze kann sich in Querrichtung gesehen in der Mitte der Vorrichtung befinden. Ebenso können die Arme jedoch auch in einem in Querrichtung äusseren Bereich der Vorrichtung weg von der Mitte der Vorrichtung an den Stützen gelagert sein.

Unter Arme sind bewegbare Elemente zu verstehen, an denen das Sicherungselement gelagert werden kann. Die Arme sind vorzugsweise als längliche Körper mit einem distalen und einem proximalen Ende ausgebildet. Mit Vorteil sind die Arme je mit ihrem proximalen Ende schwenkbar um eine Achse an einer Stütze gelagert. Bevorzugt ist am distalen Ende der Arme das Sicherungselement, insbesondere schwenkbar gelagert. Das ermöglicht eine platzsparende Konstruktion und das Sicherungselement ist auf diese Weise rasch und einfach von seiner ersten Position in seine zweite Position und zurück verstellbar.

Bevorzugt sind die Stützen in lateraler Richtung mittig auf der mittigen Längsachse angeordnet und die mindestens zwei Arme sind in Querrichtung ausgerichtet, während das Sicherungselement in Längsrichtung ausgerichtet ist. Dadurch ist die Vorrichtung platzsparend aufgebaut, so dass ein grösstmöglicher Laderaum entsteht. Vorzugsweise bilden die Arme und das Sicherungselement eine Seitenwand der Vorrichtung. Dadurch kann das Ladegut in lateraler Richtung besonders zuverlässig gesichert werden, da die gesamte Ladung durch das Sicherungselement gut erfasst werden kann.

Alternativ dazu besteht auch die Möglichkeit, dass die Vorrichtung keine Arme umfasst. In diesem Fall kann das Sicherungselement beispielsweise an einer Basis der Vorrichtung oder direkt an den Stützen gelagert sein. Weiter besteht die Möglichkeit, dass die Arme nicht schwenkbar sondern verschiebbar gelagert sind.

Mit Vorteil umfasst die Vorrichtung ein Dach zum Überdecken der Ladung. Durch das Dach kann die Ladung gegen äussere Einflüsse wie beispielsweise Nässe oder Schmutz geschützt werden. Zudem kann das Dach auch ein unerwünschtes Bewegen der Ladung in vertikaler Richtung nach oben verhindern, insbesondere kann durch das Dach verhindert werden, dass sich Einzelteile der Ladung während einer Fahrt von der Ladung lösen und verloren gehen. Das Dach kann dabei aus einem steifen Material wie Metall, Holz oder steifem Kunststoff besehen. Genauso gut, kann das Dach aber auch aus duktilem oder weichem Material wie zum Beispiel weichem Kunststoff oder aus einer Abdeckung aus Textil bestehen.

Bevorzugt ist das Dach aus einer Kombination aus steifen und aus duktilen Materialien gefertigt, insbesondere aus einem Rahmen aus steifem Material und einer am Rahmen befestigter Abdeckung aus weichem Material. Das bietet den Vorteil, dass ein leichtes aber dennoch stabiles Dach konstruiert werden kann.

Es besteht alternativ die Möglichkeit, dass die Vorrichtung kein Dach aufweist. In diesem Fall kann die Ladung zum Beispiel durch ein Sicherungselement gegen ein Verschieben nach oben gesichert werden.

Bevorzugt umfasst die Vorrichtung einen horizontalen Verstellmechanismus, mit dem das Dach vertikal relativ zu den Stützen verschiebbar ist. Somit kann der vertikale Abstand zwischen dem Dach und der Ladefläche des Laderaums eingestellt werden. Dadurch ist es möglich, die Höhe des Dachs an die Höhe der Ladung anzupassen. Die Ladung kann durch den Verstellmechanismus in vertikaler Richtung besser gesichert werden, da beispielsweise das Dach so eingestellt werden kann, dass es die Ladung von oben berührt oder sogar mit einer Kraft von oben auf die Ladung drückt. Dadurch wird eine vertikale Verschiebung oder ein Lösen der Ladung in vertikaler Richtung zuverlässig verhindert. Das erhöht die Sicherheit.

Der Verstellmechanismus kann beispielsweise eine vertikale Führung, ein Hebelgestänge, einen Klappmechanismus oder dergleichen umfassen. Dabei ist unerheblich, ob das Dach nur in vertikaler Richtung oder zusätzlich auch in lateraler Richtung relativ zu den Stützen verschiebbar ist. Auch kann das Dach nur linear verschiebbar oder drehbar ausgeführt sein. Das Dach ist dabei relativ zu den Stützen verschiebbar. Das schliesst nicht aus, dass sich ein Element der Stützen mit dem Dach mitbewegen kann. Das Dach kann manuell oder mittels Antrieb verstellbar ausgeführt sein. Vorzugsweise umfasst der Verstellmechanismus einen Hydraulikantrieb. Das ermöglicht eine rasche und komfortable Verstellung des Dachs.

Alternativ dazu kann das Dach auch relativ zu den Stützen nicht verschiebbar angebracht sein. Das ermöglicht eine einfache und kostengünstige Konstruktion der Vorrichtung.

Vorzugsweise umfasst die Vorrichtung einen Antrieb, vorzugsweise einen Hydraulikantrieb, zum Verstellen der Arme. Das erlaubt ein komfortables Verstellen des Sicherungselements über die Arme. Es ist dabei unerheblich, ob der Antrieb direkt oder indirekt über weitere Elemente mit den Armen zusammenwirkt. Vorzugsweise wirkt der Antrieb mit einem Übersetzungsmechanismus zusammen, der wiederum mit den Armen zusammenwirkt. Dadurch kann das Sicherungselement effizient von seiner ersten Position in seine zweite Position und zurück bewegt werden, was ein rasches Sichern bzw. Entsichern der Ladung ermöglicht.

Der Antrieb kann beispielsweise einen Hydraulikzylinder, Pneumatikzylinder, Elektro- oder Verbrennungsmotor umfassen. Vorzugsweise umfasst der Antrieb einen Hydraulikzylinder. Hydraulikzylinder sind einfach verfügbar und in unterschiedlichen Grössen erhältlich, so dass der Antrieb optimal auf die Vorrichtung abgestimmt werden kann.

Alternativ dazu besteht auch die Möglichkeit, dass die Vorrichtung keinen Antrieb umfasst. Das Sicherungselement kann in diesem Fall zum Beispiel manuell von Hand verstellt werden.

Mit Vorteil ist der Antrieb drahtlos steuerbar. Dadurch muss sich der Benutzer nicht an einen bestimmten Ort befinden, wenn er den Antrieb steuert und kann daher während dem Verstellen des Sicherungselements die Ladung besser überwachen. Das erhöht die Sicherheit. Vorzugsweise ist der Antrieb über eine Fernbedienung per Funk steuerbar. Solche Funksteuerungen sind bekannt und ihr Einsatz bedingt keine aufwändige Entwicklung.

Alternativ kann der Antrieb auch über eine Bedieneinheit gesteuert werden, die mit einem Kabel mit dem Antrieb verbunden ist. Das ermöglicht es eine kostengünstige Steuerung bereitzustellen.

Bevorzugt beinhaltet der Antrieb einen Antriebszylinder und die Vorrichtung umfasst einen Übersetzungsmechanismus zum Übersetzen einer vom Antriebszylinder erzeugten Kraft auf die Arme. Das bietet den Vorteil, dass die Antriebskraft in optimaler Weise auf die Arme übertragen werden kann und die Antriebskraft effizient für den Antrieb des Sicherungselements genutzt werden kann.

Dabei ist der Begriff "Übersetzen" nicht auf ein Übersetzungsverhältnis beschränkt, dessen Betrag grösser als eins ist, sondern umfasst auch ein Übersetzungsverhältnis, dessen Betrag kleiner als eins ist. Dieser Fall wird auch als Untersetzung bezeichnet. Unter "Übersetzungsmechanismus" sind alle mechanische Übersetzungen zu verstehen wie zum Beispiel ein Getriebe mit Zahnräder, ein Schneckengetriebe, ein Riemengetriebe oder ein Hebelmechanismus. Der Antriebszylinder kann beispielsweise als Hydraulik- oder Pneumatikzylinder ausgebildet sein. Bevorzugt wirkt die vom Antriebszylinder erzeugte Kraft auf den Übersetzungsmechanismus und dieser wirkt wiederum mit einem Arm zusammen, um das Sicherungselement zu bewegen. Dadurch kann die vom Antriebszylinder erzeugte Kraft besonders effizient übersetzt werden, um das Sicherungselement zu bewegen.

Alternativ kann die Kraft vom Antriebszylinder auch direkt auf das Sicherungselement ohne Übersetzung übertragen werden. Das vereinfacht die Konstruktion.

Vorteilhafterweise ist der Übersetzungsmechanismus als Kniehebelgestänge ausgebildet, welches ein erstes Element und ein zweites Element umfasst, wobei das erste Element um eine erste Schwenkachse schwenkbar an einem der mindestens zwei Stützen gelagert ist und das erste Element um eine zweite Schwenkachse schwenkbar am zweiten Element gelagert ist. Das zweite Element ist um eine dritte Schwenkachse schwenkbar an einem der mindestens zwei Arme gelagert und ein freies Ende einer Kolbenstange des Antriebszylinders ist ebenfalls schwenkbar um die zweite Schwenkachse am ersten Element und am zweiten Element gelagert. Das Kniehebelgestänge bietet den Vorteil, dass die vom Antriebszylinder erzeugte Kraft besonders effizient übersetzt werden kann, um die Sicherungselemente zu bewegen. Zudem ist das Kniehebelgestänge ein kostengünstiger, robuster und wartungsarmer Übersetzungsmechanismus.

Alternativ dazu besteht auch die Möglichkeit, dass der Übersetzungsmechanismus nur mit einem Hebelelement oder auf andere Art und Weise beispielsweise mittels Zahnradgetriebe ausgebildet ist.

Bevorzugt definiert die erste Position des Sicherungselements eine Offenstellung, in der sich das Sicherungselement in einem rechtwinklig zu einer Verbindungslinie zwischen den Stützen gemessenen horizontalen ersten Abstand von der Verbindungslinie befindet, wobei die Ladung in dieser ersten Position durch das Sicherungselement freigegeben ist. Dabei bedeutet freigegeben, dass der Laderaum von aussen ohne Behinderung durch das Sicherungselement gut zugänglich ist. Somit kann in der Offenstellung der Laderaum rasch und ohne Behinderung beladen oder entladen werden.

Alternativ besteht auch die Möglichkeit, dass keine Offenstellung definiert, sondern nur leicht wegschwenkbar ist, so dass der Laderaum teilweise zugänglich ist.

Vorteilhafterweise definiert die zweite Position des Sicherungselements eine Transportstellung, in der sich das Sicherungselement in einem rechtwinklig zu einer Verbindungslinie zwischen den Stützen gemessenen horizontalen zweiten Abstand von der Verbindungslinie befindet, wobei der zweite Abstand vorzugsweise kleiner ist als der erste Abstand. Die Ladung ist in dieser zweiten Position durch das Sicherungselement im Laderaum des Fahrzeugs gehalten. Dadurch ist die Ladung sicher im Laderaum gehalten und kann sich während der Fahrt nicht unerwünscht bewegen. Das erhöht die Sicherheit und erlaubt die Vorschriften für den Strassenverkehr einzuhalten.

Bevorzugt ist das Sicherungselement in der ersten Position bezüglich der zweiten Position vertikal beabstandet. Dadurch kann das Sicherungselement in seiner ersten Position derart angeordnet werden, dass die Ladung von ausserhalb der Vorrichtung gut zugänglich ist. Das ermöglicht ein ungehindertes Beladen und Entladen des Laderaums.

Vorzugsweise ist das Sicherungselement in seiner ersten Position weiter oben als in seiner zweiten Position. Dadurch stört das Sicherungselement nicht beim Beladen oder beim Entladen des Laderaums. So kann beispielsweise ein Gabelstapler in Querrichtung näher an den Laderaum heranfahren ohne dass dieser vom Sicherungselement behindert wird. Das erleichtert die Beladung und Entladung des Laderaums.

In einer anderen Variante kann sich das Sicherungselement in seiner ersten Position auch weiter unten als in seiner zweiten Position befinden. Dies bietet den Vorteil, dass die vertikale Abmessung der Vorrichtung geringer ist, als wenn sich das Sicherungselement in seiner ersten Position weiter oben als in seiner zweiten Position befindet. Das ist dann vorteilhaft, wenn in vertikaler Richtung wenig Platz zur Verfügung steht zum Beladen oder Entladen des Laderaums, beispielsweise wenn sich die Vorrichtung in einem Raum von niedriger Höhe befindet.

Das Sicherungselement kann sich alternativ in seiner zweiten Position auch nur in einem horizontalen Abstand von der ersten Position befinden und vertikal auf der gleichen Höhe wie in seiner ersten Position angeordnet sein.

Bevorzugt wirkt das Sicherungselement in seiner zweiten Position mit einer Kraft auf die Ladung ein. Das hat den Vorteil, dass die Ladung besonders gut im Laderaum gegen eine Verschiebung gesichert werden kann. Dabei ist unerheblich, auf welche Art und Weise und in welcher Richtung die Kraft auf die Ladung einwirkt und ob zwischen dem Sicherungselement und der Ladung ein weiteres Element angeordnet ist. So kann das Sicherungselement beispielsweise mit einer Kraft von oben nach unten zur Ladefläche des Laderaums hin auf die Ladung einwirken, um die Ladung auf die Ladefläche zu drücken. Vorzugsweise wirkt das Sicherungselement jedoch mit einer Kraft in lateraler Richtung auf die Ladung ein. Dadurch ist die Ladung gegen eine Verschiebung besonders gut gesichert, da während der Fahrt die Gefahr einer lateralen Verschiebung am grössten ist.

Alternativ dazu besteht auch die Möglichkeit, dass die Ladung durch das Sicherungselement nur gehalten ist ohne dass eine Kraft auf die Ladung einwirkt. So kann das Sicherungselement die Ladung beispielsweise durch Formschluss in Position halten.

Vorzugsweise umfasst die Vorrichtung mindestens vier Arme und mindestens zwei Sicherungselemente, die derart angeordnet sind, dass die mindestens zwei Sicherungselemente zwischen den Stützen an den Armen schwenkbar gelagert sind. Mit zwei Sicherungselementen kann die Ladung besser gesichert werden, als nur mit einem Sicherungselement. Das erhöht weiter die Sicherheit.

Vorzugsweise sind die mindestens zwei Sicherungselemente parallel zur Längsachse in Querrichtung von der mittigen Längsachse beabstandet angeordnet, so dass sich je ein Sicherungselement in Querrichtung auf einer Seite der Ladung befindet. Dadurch kann die Ladung in beide lateralen Richtungen gehalten werden. Zudem kann die Ladung auch in Querrichtung von beiden Seiten in den Laderaum beladen oder vom Laderaum entladen werden, da von jeder Seite in Querrichtung je ein Sicherheitselement von seiner ersten Position in seine zweite Position und zurück verstellt werden kann. Das vereinfacht den Zugang zur Ladung und die Beladung und Entladung des Laderaums.

Vorzugsweise bilden mindestens zwei Arme und mindestens ein Sicherungselement je eine Seitenwand, wobei die beiden Seitenwände parallel zueinander und parallel zur Längsrichtung ausgerichtet sind. Dadurch kann das Ladegut lateral besonders zuverlässig gesichert werden, da die gesamte Ladung lateral je durch mindestens ein Sicherungselement gut erfasst werden kann. Bevorzugt ist dabei ein horizontaler Abstand zwischen den beiden Seitenwänden in der ersten Position der Sicherungselemente grösser als ein horizontaler Abstand zwischen den beiden Sicherungselementen in der zweiten Position der Sicherungselemente.

Mit Vorteil sind die Sicherungselemente unabhängig voneinander verstellbar. Das ermöglicht einen flexiblen Einsatz der Vorrichtung. So kann beispielsweise nur ein Sicherungselement von seiner zweiten Position in seine erste Position gebracht werden, falls die Vorrichtung an einer Wand oder einem Gebäude steht und in Querrichtung nur Platz von einer Seite vorhanden ist, um den Laderaum zu beladen oder zu entladen.

Alternativ kann die Vorrichtung auch nur ein Sicherungselement und nur zwei Arme umfassen. Das ermöglicht einen einfachen Aufbau.

Vorzugsweise ist die Vorrichtung auf einem Fahrzeug, insbesondere auf einem Anhänger, angeordnet. Dabei entspricht vorzugsweise die Grundfläche des Laderaums einer Ladefläche des Fahrzeugs. Das mindestens eine Sicherungselement befindet sich vorzugsweise in seiner ersten Position in Querrichtung gesehen ausserhalb der Ladefläche des Fahrzeuges. In seiner zweiten Position befindet sich das Sicherungselement in Querrichtung gesehen innerhalb des Laderaums und damit innerhalb der Ladefläche des Fahrzeugs.

Mit Vorteil befindet sich das Sicherungselement in seiner zweiten Position in einem zur in Querrichtung mittig angeordneten Längsachse des Fahrzeugs gemessenen horizontalen Abstand, der derart einstellbar ist, dass dieser kleiner 80 %, vorzugsweise kleiner 60 %, besonders bevorzugt kleiner 50% als die halbe Breite des Fahrzeuges beträgt.

Falls die Vorrichtung Stützen und Arme umfasst, befinden sich die Stützen vorzugsweise in Querrichtung mittig auf dem Fahrzeug und sind in Längsrichtung voneinander beabstandet. Vorzugsweise sind die Arme schwenkbar an den Stützen gelagert und das Sicherungselement ist schwenkbar an die Stützen gelagert, so dass zwischen den Stützen und parallel zur Längsachse des Fahrzeuges mindestens ein Sicherungselement angeordnet ist. Dadurch kann der Laderaum auf dem Fahrzeug einfach lateral beladen oder entladen werden.

Dabei kann die Vorrichtung auf jedem beliebigen motorisierten oder unmotorisierten Fahrzeug montiert werden, wie beispielsweise auf einem Transportfahrzeug wie einem Lastwagen, ein- oder mehrachsigen Anhängern, einem Personenfahrzeug, einem Raupentransportfahrzeug, einem Geländefahrzeug, einem landwirtschaftlichen Fahrzeug wie einem Traktor, einem ein- oder mehrachsigen Motormäher oder einem Motoreinachser mit Anhänger, auf einem Reinigungsfahrzeug auf einem zwei- oder dreirädrigen Fahrzeug, auf einem Kleinmotorfahrzeuge wie beispielsweise einem Quad oder auf Arbeitsmotorwagen, wie beispielsweise Motorwagen zum Aufbereiten und Aufbringen von Asphalt auf der Strasse sowie auf jeder Art von Elektrofahrzeugen. Bevorzugt ist die Vorrichtung auf einem landwirtschaftlichen Anhänger montiert. Je nach Ausführung kann die erfindungsgemässe Vorrichtung mit weiteren mechanischen Einrichtungen auf dem Anhänger kombiniert werden. So kann der Anhänger beispielsweise neben der erfindungsgemässen Vorrichtung zum Sichern der Ladung auch eine Handhabungseinheit zum Handhaben der Ladung umfassen, wie zum Beispiel eine Vorrichtung zum Beladen oder Entladen von Paletten oder Kisten oder eine Vorrichtung zum Verpacken der Ladung. Die Erfindung betrifft weiter ein Verfahren zum Sichern einer Ladung in einem Laderaum eines Fahrzeuges, mit einer Vorrichtung zur Sicherung einer Ladung in einem Laderaum, insbesondere einer Vorrichtung wie oben beschrieben, wobei mindestens ein Sicherungselement von einer ersten Position in eine zweite Position verfahren wird, um die Ladung innerhalb des Laderaums zu halten.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine Seitenansicht der erfindungsgemässen Vorrichtung in der Transportstellung, in welcher sich die Sicherheitselemente in der zweiten Position befinden,
- Fig. 1b: eine Frontansicht der erfindungsgemässen Vorrichtung in der Transportstellung,
- Fig. 2: eine Seitenansicht eines Fahrzeuganhängers, auf dem die erfindungsgemässe Vorrichtung montiert ist,
- Fig. 3: eine Seitenansicht im Detail einer Seitenwand der erfindungsgemässen Vorrichtung,
- Fig. 4: eine Frontansicht im Detail der erfindungsgemässen Vorrichtung,
- Fig. 5: eine Detailansicht des Kniehebelgestänges aus Figur 4,
- Fig. 6: eine Frontansicht einer weiteren Ausführung der erfindungsgemässen Vorrichtung in der Transportstellung ohne Dach und unten gelagerten Armen,
- Fig. 7: eine Frontansicht einer weiteren Ausführung der erfindungsgemässen Vorrichtung in der Transportstellung mit unten und mittig angeordneten Armen und
- Fig. 8: eine Frontansicht einer weiteren Ausführung der erfindungsgemässen Vorrichtung in der Transportstellung mit oben und mittig angeordneten Armen.

Grundsätzlich sind in den Figuren gleiche Teile mit gleichen Bezugszeichen versehen.

### Wege zur Ausführung der Erfindung

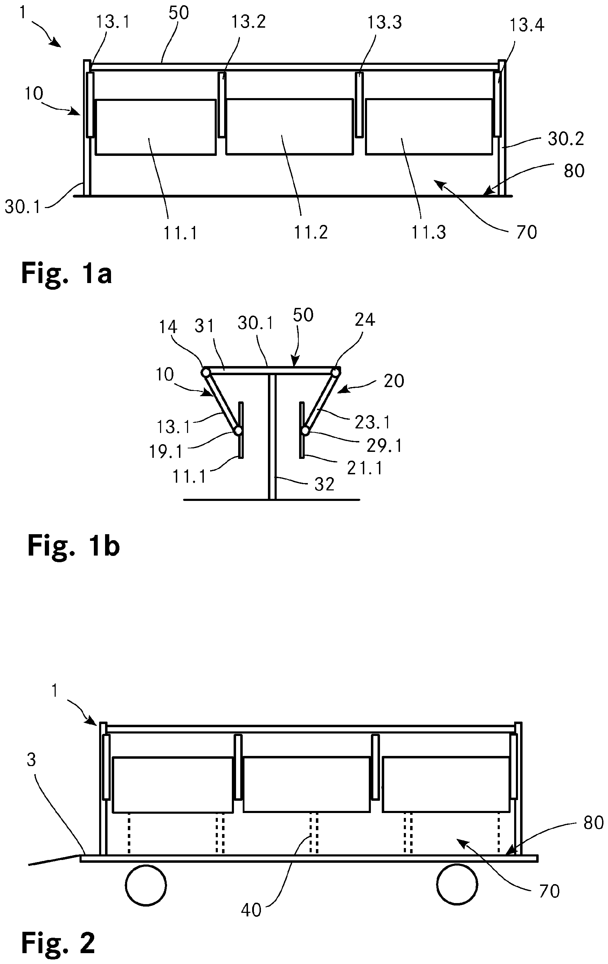

Figur 1a zeigt eine Seitenansicht der erfindungsgemässen Vorrichtung 1 in der Transportstellung zum Sichern einer Ladung auf einem Fahrzeug. Figur 1b zeigt die Vorrichtung 1 in einer Frontansicht in der Transportstellung.

Die Vorrichtung 1 umfasst zwei Stützen 30.1, 30.2, ein zwischen den Stützen angeordnetes Dach 50 und zwei Seitenwände 10, 20, die je um eine Schwenkachse 14, 24 schwenkbar an den Stützen 30.1, 30.2 gelagert sind, ersichtlich in Figur 1b. Die Seitenwände 10, 20 umfassen je vier Arme 13.1 - 13.4, und je drei Sicherheitselemente 11.1 - 11.3, dargestellt in Figur 1a. Die Stützen 30.1, 30.2 sind auf einer Längsachse beabstandet zueinander angeordnet. An einem unteren Ende der Stützen 30.1, 30.2 sind die Stützen 30.1, 30.2 vorzugsweise auf einem Fahrzeug wie beispielsweise einem Anhänger, befestigt.

Die Stützen 30.1, 30.2 begrenzen in Längsrichtung der Vorrichtung 1 einen Laderaum 70 in dem sich eine Ladung befinden kann. Die Seitenwände 10, 20 begrenzen den Laderaum 70 lateral, das heisst in Querrichtung. Eine Ladefläche 80 des Fahrzeugs zwischen den Stützen 30.1, 30.2 und das Dach 50 begrenzen den Laderaum 70 in vertikaler Richtung.

In der Frontansicht in Figur 1b ist ersichtlich, dass die Stützen 30.1, 30.2 im Wesentlichen eine T-förmige Gestalt aufweisen. Jede Stütze 30.1, 30.2 umfasst dabei ein vertikales Stützelement 32 und ein horizontales Stützelement 31, welche die T-förmige Gestalt bilden. An den freien Enden des horizontalen Stützelements 31 sind je um eine Schwenkachse 14, 24 die Seitenwände 10, 20 schwenkbar gelagert. Wie in Figur 1b ersichtlich, sind hierzu die Arme 13.1, 23.1 der Seitenwände 10, 20 an einem proximalen Ende der Arme 13.1, 23.1 um die Schwenkachsen 14, 24 schwenkbar an den freien Enden des horizontalen Stützelements 31 gelagert. An distalen Enden der Arme 13.1, 23.1 sind die Sicherheitselemente 11.1, 21.1 schwenkbar um eine Schwenkachse 19.1, 29.1 gelagert.

An den Stützen 30.1, 30.2 ist zudem das Dach 50 befestigt, dass sich zwischen den beiden Stützen 30.1, 30.2 erstreckt. Die erfindungsgemässe Vorrichtung 1 deckt damit die gesamte Ladefläche des Fahrzeuges ab. Die Seitenwände 10, 20 sind dabei in Querrichtung beidseitig der Ladung, die sich im Laderaum 70 befindet, angeordnet. Das Dach 50 deckt die Ladung von oben ab. Die erfindungsgemässe Vorrichtung 1 ist in Bezug auf ihre Längsachse symmetrisch ausgeführt, wie in Figur 1b ersichtlich.

Die Vorrichtung 1 weist eine Offenstellung und eine Transportstellung auf. In den Figuren 1a, 1b befindet sich die Vorrichtung in der Transportstellung. In der Offenstellung befinden sich die Sicherungselemente 11.1, 21.1 in ihrer ersten Position, in der die Sicherungselemente in einem grösseren horizontalen Abstand zur mittigen Längsachse oder Symmetrieachse der Vorrichtung 1 stehen als in ihrer zweiten Position. In der Offenstellung ist der Laderaum 70 von den Sicherungselementen 11.1, 21.1 freigegeben, so dass der Laderaum 70 von aussen ohne Behinderung durch die Sicherungselemente 11.1, 21.1 gut zugänglich ist. Das bedeutet, die Sicherungselemente 11.1, 21.1 sind in ihrer ersten Position nach aussen und nach oben geschwenkt, so dass der Laderaum 70 in der Offenstellung rasch und ohne Behinderung beladen oder entladen werden kann.

In der Transportstellung befinden sich die Sicherungselemente 11.1, 21.1 in ihrer zweiten Position, in der sie näher an der mittigen Längsachse stehen als in ihrer ersten Position, dargestellt in Figur 1b. Das bedeutet, dass in der zweiten Position der Sicherungselemente 11.1, 21.1 die Ladung im Laderaum 70 des Fahrzeugs durch die Sicherungselemente 11.1, 21.1 gehalten ist. Dadurch kann sich die Ladung im Laderaum 70 während der Fahrt nicht unerwünscht bewegen. Dabei kann die zweite Position der Sicherungselement 11.1, 21.1 an die Dimensionen der Ladung angepasst werden. Somit kann die zweite Position der Sicherungselemente 11.1, 21.1 in der Transportstellung in Querrichtung so gewählt werden, dass die Sicherungselemente 11.1, 21.1 lateral an der Ladung anliegen, um die Ladung lateral sicher zu halten. Zudem kann die zweite Position der Sicherungselemente auch so gewählt werden, dass die Sicherungselemente mit einer Kraft lateral auf die Ladung drücken, um die Ladung besonders fest an Ort und Stelle zu halten.

Mittels eines Verstellmechanismus, der weiter unten im Detail beschrieben wird, sind die Sicherungselemente 11.1,21.1 von ihrer ersten Position bzw. von der Offenstellung in ihre zweite Position bzw. in die Transportstellung verstellbar. Das bedeutet, die Seitenwände 10, 20 sind mittels des Verstellmechanismus von der Offenstellung in die Transportstellung und zurück verstellbar.

Die Figur 2 zeigt eine Seitenansicht der erfindungsgemässen Vorrichtung 1 auf einem Anhänger 3 montiert. Wie in der Figur 2 ersichtlich ist, befindet sich eine Stütze 30.1 an einem in Fahrtrichtung gesehen vorderen Ende des Anhängers 3 und eine Stütze 30.2 an einem in Fahrtrichtung gesehen hinteren Ende des Anhängers 3. Genauso gut kann die erfindungsgemässe Vorrichtung 1 jedoch auch auf einem motorisierten Fahrzeug, wie beispielsweise einem Lastwagen montiert sein. In Figur 2 ist zudem eine mögliche Ladung 40 dargestellt, die sich auf der Ladefläche 80 des Anhängers befindet.

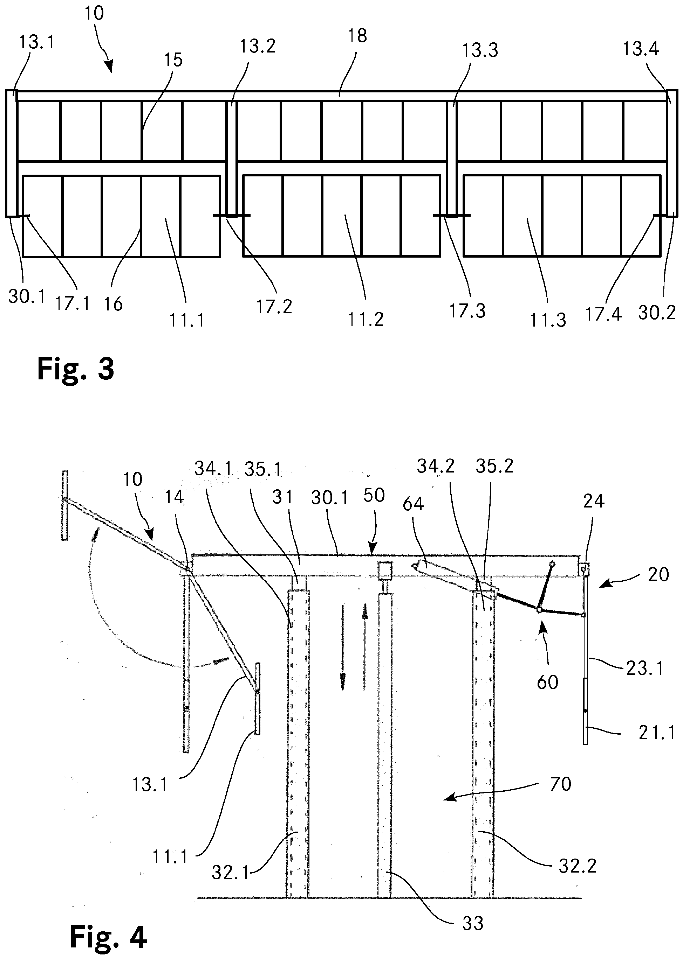

In Figur 3 ist eine Seitenwand 10 der Vorrichtung 1 in einer Seitenansicht im Detail dargestellt. Ersichtlich ist in dieser Ansicht, dass die Seitenwand 10 in der gezeigten Ausführung vier Arme 13.1-13.4 und drei Sicherungselemente 11.1-11.3 umfasst, wobei die Sicherungselemente 11.1-11.3 jeweils schwenkbar um Schwenkachsen 17.1-17.4 an zwei Armen 13.1-13.4 gelagert sind. Die Arme 13.1-13.4 sind mit einem Längsträger 18 verbunden. Zwischen den Armen 13.1-13.4 befinden sich in einem oberen Bereich der Seitenwand 10 vertikal ausgerichtete Stäbe 15, die eine Art Gitter bilden. Der Längsträger 18 ist zusammen mit den Armen 13.1-13.4 um die Schwenkachse 14, 24 schwenkbar an den horizontalen Stützelementen 31 der Stütze 30.1, 30.2 gelagert.

Die an den distalen Enden der Armen 13.1-13.4 befestigten Sicherungselemente 11.1-11.3 sind rechteckförmig ausgebildet und weisen innerhalb der Rechteckform vertikale Streben 16 auf, so dass auch die Sicherungselemente 11.1-11.3 eine Art Gitter bilden. Dabei sind die Sicherungselemente 11.1-11.3 so ausgerichtet, dass sie mit ihrer Längsseite parallel zur Längsrichtung der Vorrichtung 1 und damit parallel zur Längsrichtung des Anhängers 3 stehen. In ihrer vertikalen Mitte sind die Sicherungselemente 11.1-11.3 um die Schwenkachse 17.1-17.4 jeweils schwenkbar an den distalen Enden der Arme 13.1-13.4 gelagert. Bedingt durch ihre Schwerkraft sind die Sicherungselemente 11.1-11.3 stets vertikal ausgerichtet und zwar sowohl in ihrer ersten Position wie auch in ihrer zweiten Position.

Die Figur 4 zeigt im Detail eine Frontansicht der erfindungsgemässen Vorrichtung 1. Dabei sind in Figur 4 in der linken Hälfte der Stütze 30.1 die möglichen Positionen der Sicherungselemente 11.1, 21.1 bzw. der Seitenwände 10, 20 dargestellt. Mit einem gebogenen Doppelpfeil ist der Verstellweg der Sicherungselemente 11.1, 21.1 von ihrer ersten Position in ihre zweite Position und zurück dargestellt. Der Einfachheit halber sind dieser Verstellweg und die möglichen Positionen der Sicherungselemente 11.1, 21.1 bzw. der Seitenwände 10, 20 nur auf der linken Hälfte der Stütze 30.1 dargestellt. Die Angaben gelten analog auch für das Sicherungselement 21.1 bzw. die Seitenwand 20 an der rechten Hälfte der Stütze 30.1.

In Figur 4 ist weiter erkennbar, dass die gezeigte Ausführung der T-förmige Stütze 30.1 zwei vertikalen Stützelemente 32.1, 32.2 und ein horizontales Stützelement 30.1 umfasst.

Des Weiteren umfasst die Stütze 30.1 einen vertikalen Hydraulikzylinder 33 und für jede Seitenwand 10, 20 je einen Hydraulikzylinder 64 und je einen Übersetzungsmechanismus, der als Kniehebelgestänge 60 ausgebildet ist. Wie in Figur 4 ersichtlich, ist der Hydraulikzylinder 34 für die Seitenwand 10, 20 am horizontalen Stützelement 31 angeordnet. Der Hydraulikzylinder 64 und das Kniehebelgestänge 60 sind der Übersichtlichkeit halber nur auf der rechten Hälfte der Stütze 30.1 für die rechte Seitenwand 20 dargestellt. Sie befinden sich jedoch in analoger Weise auch auf der linken Hälfte der Stütze 30.1 für die linke Seitenwand 10. Der Hydraulikzylinder 64 wirkt jeweils mit dem Kniehebelgestänge 60 zusammen und dieses wiederum wirkt mit einer Seitenwand 10, 20 zusammen.

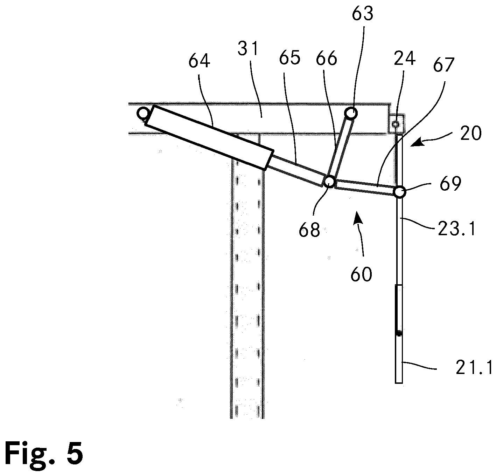

In Figur 5 ist das Kniehebelgestänge aus Figur 4 in der Frontansicht vergrössert dargestellt. Das Kniehebelgestänge 60 umfasst ein erstes Hebelelement 66 und ein zweites Hebelelement 67, wobei das erste Hebelelement 66 um eine erste Schwenkachse 63 schwenkbar am horizontalen Stützelement 31 gelagert ist. Weiter ist das erste Hebelelement 66 um eine zweite Schwenkachse 68 schwenkbar am zweiten Hebelelement 67 gelagert. Das zweite Hebelelement 67 ist um eine dritte Schwenkachse 69 schwenkbar an einem oberen Bereich der Seitenwand 20 gelagert. Anders ausgedrückt sind das erste und das zweite Hebelelement 66, 67 je mit einem freien Ende schwenkbar um die gemeinsame zweite Schwenkachse 68 gelagert, wobei das erste Hebelelement 66 mit seinem anderen freien Ende am horizontalen Stützelement 31 schwenkbar gelagert ist und das zweite Element 67 mit seinem anderen freien Ende an einem oberen Bereich der Seitenwand 20 schwenkbar gelagert ist. Der Hydraulikzylinder 64 umfasst eine ausfahrbare Kolbenstange 65 und ist an einem Ende schwenkbar am horizontalen Stützelement 31 gelagert und mit einem freien Ende der Kolbenstange 65 schwenkbar um die zweite Schwenkachse 68 am ersten und am zweiten Hebelelement 66, 67 gelagert.

Nachfolgend wird die Funktion der Vorrichtung 1 im Detail erklärt. Dabei wird das Verstellen einer in Bezug auf Figur 4 auf der rechten Hälfte der Stütze 30.1 gelagerten Seitenwand 20 mit den Armen 21.1 und den Sicherungselementen 21.1 erklärt. Wie erwähnt, befinden sich auch auf der linken Hälfte der Stütze 30.1 ein Hydraulikzylinder 64 und ein Kniehebelgestänge 60. Das Verschwenken der Seitenwand 10 auf der linken Hälfte der Stütze 30.1 mit der linken Seitenwand 10, den Armen 13.1 und den Sicherungselementen 11.1 funktioniert wie das beschriebene Verschwenken der rechten Seitenwand 20 mit den Armen 23.1 und den Sicherungselementen 21.1.

Fährt die Kolbenstange 65 des Hydraulikzylinders 66 aus, wird die Bewegung der Kolbenstange 65 über das Kniehebelgelenk 60 auf den oberen Bereich der Seitenwand 20 und damit auf die Arme 23.1 übertragen. Dadurch werden die Arme 23.1 um ihre Schwenkachse 24 ebenfalls nach aussen und nach oben geschwenkt. Durch diese Schwenkbewegung bewegen sich die Sicherungselemente 21.1 von ihrer zweiten Position im Laderaum 70 bzw. von den horizontalen Stützelementen 31.1, 31.2 weg nach aussen und nach oben. Durch das Eigengewicht der Sicherungselemente 21.1 bleiben die Sicherungselemente 21.1 während dieser Bewegung in ihrer vertikalen Lage. Das bedeutet, die Sicherungselemente 21.1 werden parallel verschoben, während die Seitenwand 20 nach aussen oben schwenkt.

Durch das Ausfahren der Kolbenstange 65 kann somit die Seitenwand 20 von innen nach aussen geschwenkt werden und die Sicherungselemente 21.1 werden von ihrer zweiten Position, in der die Sicherungselemente 21.1 die Ladung sichern nach aussen und nach oben in ihre erste Position geschwenkt.

Durch Einfahren der Kolbenstange 66 wird die Seitenwand 20 von aussen nach innen in den Laderaum hinein zur Ladung hin bewegt und die Sicherungselemente 11.1 werden von ihrer ersten Position in ihre zweite Position verfahren, um die Ladung zu sichern. Die zweite Position der Sicherungselemente 21.1 ist, wie erwähnt, an die Dimension der Ladung anpassbar. Dank dem Kniehebelmechanismus 60 kann die vom Hydraulikzylinder 64 erzeugte Kraft und Bewegung in optimaler Weise auf die Seitenwand 20 und damit auf die Sicherungselemente 21.1 übertragen werden. Je nach dem wie weit die Kolbenstange 65 eingefahren wird, liegen die Sicherungselemente 21.1 lateral an der Ladung an oder drücken mit einer Kraft lateral auf die Ladung, um die Ladung besonders gut zu sichern und um ein unerwünschtes Verschieben der Ladung während der Fahrt zu vermeiden. Dabei können die Seitenwände 10, 20 auch unabhängig voneinander bewegt werden. Das ist dann vorteilhaft, wenn der Laderaum nur von einer Seite Beladen oder Entladen werden muss oder wenn sich die Ladung in Querrichtung nicht mittig im Laderaum 70 befindet. Mögliche Position der Sicherungselemente 11.1, 21.1 und der Seitenwände 10, 20 sind in der linken Hälfte der Stütze 30.1 in Figur 4 dargestellt.

Wie in Figur 4 ersichtlich ist, umfasst die Stütze 30.1 zwei vertikale Stützelemente 32.1, 32.2. Diese bestehen jeweils aus einem ersten Element 34.1, 34.2, welches fahrzeugfest angeordnet ist und einem beweglichen zweiten Element 35.1, 35.2, welches zusammen mit einer Kolbenstange des vertikalen Hubzylinders 33 in vertikaler Richtung verschiebbar ist. Das bewegliche Element 35.1, 35.2 ist mit dem horizontalen Stützelement 31 verbunden. Wird beispielsweise die Kolbenstange des vertikalen Hubzylinders 33 ausgefahren, wird zusammen mit den beweglichen Elementen 35.1, 35.2 das horizontale Stützelement 31 und damit auch die Seitenwände 10, 20 und das Dach 50 vertikal nach oben verschoben.

Dadurch kann die Höhe der Vorrichtung 1 an die Höhe der Ladung angepasst werden. Zudem kann das Dach 50 mit den Seitenwänden 10, 20 beispielsweise auch temporär während dem Beladen oder Entladen des Laderaums 70 nach oben verschoben werden, um besser von aussen auf den Laderaum 70 zugreifen zu können. Das Dach 50 kann aber auch so auf die Ladung abgesenkt werden, dass dieses mit einer Kraft von oben vertikal auf die Ladung einwirkt. Dadurch ist die Ladung besonders gut auf dem Fahrzeug gesichert.

Der oben beschriebene Aufbau und die Funktion der Stütze gilt nicht nur für die in Figur 4 gezeigte Stütze 30.1 sondern auch für die andere Stütze 30.2 der Vorrichtung 1. Wird eine Seitenwand 10, 20 bewegt, fahren beide Kolbenstangen 35 der Hydraulikzylinder 64 für die Seitenwände 10, 20 beider Stützen 30.1 30.2 synchron aus oder ein. Ebenso fahren die vertikalen Hydraulikzylinder 33 beider Stützen 30.1, 30.2 synchron aus oder ein, um das Dach 50 und die Seitenwände 10, 20 in vertikaler Richtung anzuheben oder abzusenken.

Ein Hydraulikantrieb für die vertikalen Hydraulikzylinder 33 und die Hydraulikzylinder 64 für die Seitenwände 10, 20 sind vorzugsweise über eine Funksteuerung betätigbar. Dadurch muss der Benutzer den Antrieb nicht an einem bestimmten Ort betätigen und kann während dem Verstellen der Seitenwände 10, 20 oder des Dachs 50 den Vorgang überwachen. Dem Fachmann sind solche Funksteuerungen zur Betätigung des Hydraulikantriebs bekannt.

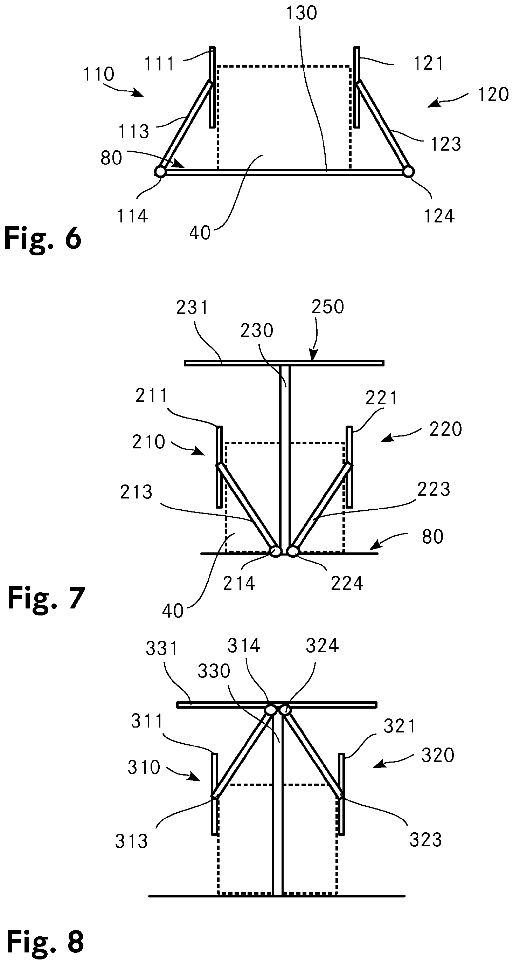

Die Figur 6 zeigt eine Frontansicht einer weiteren Ausführung der erfindungsgemässen Vorrichtung, bei der die Arme 213, 123 an einer Stütze 130 im Wesentlichen auf der Höhe der Ladefläche 80 jeweils um Schwenkachsen 114, 124 schwenkbar gelagert sind. Mit einer gestrichelten Linie ist eine mögliche Ladung 40 dargestellt. Im Unterschied zur oben beschriebenen Ausführung können bei dieser Anordnung die Seitenwände 110, 120 von unten aussen nach oben und nach innen geschwenkt werden, so dass die Sicherungselemente 111, 121 in ihrer ersten Position weiter unten sind, als in ihrer zweiten Position, in der sie die Ladung sichern. Wie in Figur 6 ersichtlich, umfasst diese Ausführung kein Dach. Dadurch ist die Vorrichtung kompakt und leicht.

Die Figur 7 zeigt wiederum eine Frontansicht einer weiteren Ausführung der erfindungsgemässen Vorrichtung. Bei dieser Ausführung sind die Arme 213, 223 an einer Stütze 230 jeweils um in Querrichtung mittig angeordnete Schwenkachsen 214, 224 schwenkbar gelagert. Auch bei dieser Ausführung befinden sich die Sicherungselemente 211, 221 in ihrer ersten Position weiter unten und weiter aussen als in ihrer zweiten Position, in der sie die Ladung 40 sichern. Zudem umfassen in dieser Ausführung die Seitwände 210, 220 vorzugsweise jeweils nur zwei Arme bei den Stützen 230, um den Laderaum nicht durch zusätzliche zwischen den Stützen 230 angeordnete Arme zu verkleinern. Das horizontale Stützelement 231 dient in dieser Ausführung nur dazu das Dach 250 zu halten.

Eine weitere Ausführung der Vorrichtung ist in Figur 8 dargestellt. In dieser Ausführung sind die Arme 313, 323 in Querrichtung mittig oben am horizontalen Stützelement 313 der Stütze 330 jeweils um Schwenkachsen 314, 324 schwenkbar gelagert. Dadurch können die Seitenwände 310, 320 von oben aussen nach innen unten verstellt werden, um die Sicherungselemente 311, 321 von ihrer ersten Position in ihre zweite Position zu schwenken.

Die Erfindung ist nicht auf die oben beschriebenen Ausführungen beschränkt. So können beispielsweise die Sicherungselemente anders ausgeführt sein und müssen nicht in Form eines Gitters ausgestaltet sein. Die Sicherungselemente können beispielsweise nur aus Stangen oder aus Wänden bestehen oder die Sicherungselemente können aus Gurten, die in Form eines Gitters angeordnet sind, bestehen. Auch können die Sicherungselemente anders als beschrieben an den Stützen gelagert sein. So ist nicht zwingend, dass die Vorrichtung Arme aufweist. Die Sicherungselemente können auch an einem anderen beweglichen Element gelagert sein oder direkt an den Stützen angebracht sein.

Auch die Stützen können von der beschriebenen Form abweichen. So können die Stützen beispielsweise in Form eines Portals, einer Wand oder in Form von mehreren vertikalen Träger ausgebildet sein. Entgegen obiger Beschreibung des Ausführungsbeispiels können auch mehrere Stützen in Fahrzeuglängsrichtung hintereinander angeordnet sein. Dadurch verkleinert sich zwar der nutzbare Laderaum, jedoch kann mit mehreren Stützen eine sehr stabile Konstruktion erreicht werden.

Auch kann das Kniehebelgestänge anders ausgeführt sein. So kann dieses beispielsweise nur einen Hebelarm umfassen oder der zweite Hebelarm kann indirekt über ein weiteres Element mit einer Seitenwand verbunden sein. Zudem können auch andere Antriebe als die Hydraulikzylinder eingesetzt werden, um die Sicherungselemente zu verschieben oder um das Dach vertikal zu verstellen. So können zum Beispiel Elektromotoren zum Einsatz kommen.

Zusammenfassend ist festzustellen, dass eine Vorrichtung bereitgestellt wird, die Ladungen unterschiedlicher Dimensionen zuverlässig sichern kann.

## Patentansprüche

1. Vorrichtung (1) zur lateralen Sicherung einer Ladung (40) in einem Laderaum (70) eines Fahrzeuges (3), insbesondere eines Anhängers, umfassend den Laderaum (70) und mindestens ein Sicherungselement (11.1-11.3) zur Sicherung der Ladung (40) im Laderaum (70), wobei das Sicherungselement (11.1-11.3) von einer ersten Position in eine zweite Position, zum Halten der Ladung (40), verfahrbar ist, wobei sich die zweite Position des Sicherungselements (11.1-11.3) innerhalb des Laderaums (70) befindet und das Sicherungselement (11.1-11.3) von einem Randbereich des Laderaums (70) nach innen zur Mitte des Laderaums (70) hin in die zweite Position des Sicherungselements (11.1-11.3) verfahrbar ist, **dadurch gekennzeichnet dass** die Vorrichtung (1) mindestens zwei Stützen (30.1, 30.2) und mindestens zwei Arme (13.1-13.4) umfasst, wobei die mindestens zwei Arme (13.1-13.4) je schwenkbar an einer Stütze (30.1, 30.2) gelagert sind und das Sicherungselement (11.1-11.3) schwenkbar zwischen den zwei Armen (13.1-13.4) gelagert ist' und wobei durch die schwenkbare Lagerung das Sicherungselement (11.1-11.3) von seiner ersten Position in seine zweite Position und zurück bewegt werden kann².

2. Vorrichtung nach Anspruch 1, **gekennzeichnet durch** ein Dach (50) zum Überdecken der Ladung (40).

3. Vorrichtung nach Anspruch 2, **gekennzeichnet durch** einen horizontalen Verstellmechanismus, mit dem das Dach (50) vertikal relativ zu den Stützen (30.1, 30.2) verschiebbar ist.

4. Vorrichtung nach Anspruch 3, **dadurch gekennzeichnet, dass** die Vorrichtung (1) einen Antrieb umfasst, vorzugsweise einen Hydraulikantrieb, zum Verstellen der Arme (13.1-13.4).

5. Vorrichtung nach Anspruch 4, **dadurch gekennzeichnet, dass** der Antrieb drahtlos steuerbar ist.

6. Vorrichtung nach Anspruch 4 oder 5, **dadurch gekennzeichnet, dass** der Antrieb einen Antriebszylinder (64) beinhaltet und die Vorrichtung (1) einen Übersetzungsmechanismus (60) umfasst zum Übersetzen einer vom Antriebszylinder (64) erzeugten Kraft auf das Sicherungselement (13.1-13.4).

7. Vorrichtung nach Anspruch 6, **dadurch gekennzeichnet, dass** der Übersetzungsmechanismus (60) als Kniehebelgestänge (60) ausgebildet ist, welches ein erstes Element (66) und ein zweites Element (67) umfasst, wobei das erste Element (66) um eine erste Schwenkachse (63) schwenkbar an einem der mindestens zwei Stützen (30.1, 30.2) gelagert ist und das erste Element (66) um eine zweite Schwenkachse (68) schwenkbar am zweiten Element (67) gelagert ist, während das zweite Element (67) um eine dritte Schwenkachse (69) schwenkbar an einem der mindestens zwei Arme (13.1-13.4) gelagert ist und ein freies Ende einer Kolbenstange (65) des Antriebszylinders (64) ebenfalls schwenkbar um die zweite Schwenkachse (68) am ersten Element (66) und am zweiten Element (67) gelagert ist.

8. Vorrichtung nach Anspruch 1, **dadurch gekennzeichnet, dass** die erste Position des Sicherungselements (11.1-11.3) eine Offenstellung definiert, in der sich das Sicherungselement (11.1-11.3) in einem rechtwinklig zu einer Verbindungslinie zwischen den Stützen (30.1, 30.2) gemessenen horizontalen ersten Abstand von der Verbindungslinie befindet, wobei die Ladung (40) in dieser ersten Position durch das Sicherungselement (11.1-11.3) freigegeben ist.

9. Vorrichtung nach Anspruch 1 oder 8, **dadurch gekennzeichnet, dass** die zweite Position des Sicherungselements (11.1-11.3) eine Transportstellung definiert, in der sich das Sicherungselement (11.1-11.3) in einem rechtwinklig zu einer Verbindungslinie zwischen den Stützen (30.1, 30.2) gemessenen horizontalen zweiten Abstand von der Verbindungslinie befindet, wobei der zweite Abstand vorzugsweise kleiner ist als der erste Abstand und wobei die Ladung (40) in dieser zweiten Position durch das Sicherungselement (11.1-11.3) im Laderaum (70) des Fahrzeug (3) gehalten ist.

10. Vorrichtung nach einem der Ansprüche 1 bis 9, **dadurch gekennzeichnet, dass** das Sicherungselement (11.1-11.3) in der ersten Position bezüglich der zweiten Position vertikal beabstandet ist.

11. Vorrichtung nach einem der Ansprüche 1 bis 10, **dadurch gekennzeichnet, dass** das Sicherungselement (11.1-11.3) in seiner zweiten Position mit einer Kraft auf die Ladung (40) einwirkt.

12. Vorrichtung nach einem der Ansprüche 1 bis 11, **dadurch gekennzeichnet, dass** die Vorrichtung (1) mindestens vier Arme (13.1-13.4) und mindestens zwei Sicherungselemente (11.1-11.3) umfasst, die derart angeordnet sind, dass die mindestens zwei Sicherungselemente (11.1-11.3) zwischen den Stützen (30.1, 30.2) an den Armen (13.1-13.4) schwenkbar gelagert sind.

13. Fahrzeug (3), insbesondere ein Anhänger, umfassend eine Vorrichtung nach einem der Ansprüche 1 bis 12.

14. Verfahren zum Sichern einer Ladung (40) in einem Laderaum (70) eines Fahrzeuges (3), mit einer Vorrichtung (1) zur Sicherung einer Ladung (40) in einem Laderaum (70), insbesondere einer Vorrichtung (1) nach einem der Ansprüche 1 bis 12, wobei mindestens ein Sicherungselement (11.1-11.3) von einer ersten Position in eine zweite Position verfahren wird, um die Ladung (40) innerhalb des Laderaums (70) zu halten, wobei die Vorrichtung (1) mindestens zwei Stützen (30.1, 30.2) und mindestens zwei Arme (13.1-13.4) umfasst, wobei die mindestens zwei Arme (13.1-13.4) je schwenkbar an einer Stütze (30.1, 30.2) gelagert sind und das Sicherungselement (11.1-11.3) schwenkbar zwischen den zwei Armen (13.1-13.4) gelagert ist³ und wobei durch die schwenkbare Lagerung das Sicherungselement (11.1-11.3) von seiner ersten Position in seine zweite Position und zurück bewegt wird⁴.

## Claims

1. Apparatus (1) for laterally securing a load (40) in a loading space (70) of a vehicle (3), in particular of a trailer, comprising the loading space (70) and at least one securing element (11.1-11.3) for securing the load (40) in the loading space (70), wherein the securing element (11.1-11.3) can be shifted from a first position into a second position, for the purpose of retaining the load (40), wherein the second position of the securing element (11.1-11.3) is located within the loading space (70), and the securing element (11.1-11.3) can be shifted inwards, from a peripheral region of the loading space (70), towards the centre of the loading space (70) into the second position of the securing element (11.1-11.3),
**characterized in that**
the apparatus (1) comprises at least two supports (30.1, 30.2) and at least two arms (13.1-13.4), wherein the at least two arms (13.1-13.4) are each mounted in a pivotable manner on a support (30.1, 30.2) and the securing element (11.1-11.3) is mounted in a pivotable manner between the two arms (13.1-13.4), and wherein the pivotable mounting allows the securing element (11.1-11.3) to be moved from its first position into its second position and back.

2. Apparatus according to Claim 1, **characterized by** a roof (50) for covering over the load (40).

3. Apparatus according to Claim 2, **characterized by** a horizontal adjustment mechanism, by means of which the roof (50) can be displaced relative to the supports (30.1, 30.2).

4. Apparatus according to Claim 3, **characterized in that** the apparatus (1) comprises a drive, preferably a hydraulic drive, for adjusting the arms (13.1-13.4).

5. Apparatus according to Claim 4, **characterized in that** the drive can be controlled wirelessly.

6. Apparatus according to Claim 4 or 5, **characterized in that** the drive contains a drive cylinder (64) and the apparatus (1) comprises a transmission mechanism (60), by means of which a force generated by the drive cylinder (64) can be transmitted to the securing element (13.1-13.4).

7. Apparatus according to Claim 6, **characterized in that** the transmission mechanism (60) is designed in the form of a toggle mechanism (60) comprising a first element (66) and a second element (67), wherein the first element (66) is mounted on one of the at least two supports (30.1, 30.2) for pivoting action about a first pivot axis (63) and the first element (66) is mounted on the second element (67) for pivoting action about a second pivot axis (68), whereas the second element (67) is mounted on one of the at least two arms (13.1-13.4) for pivoting action about a third pivot axis (69) and a free end of a piston rod (65) of the drive cylinder (64) is mounted on the first element (66) and on the second element (67) likewise for pivoting action about the second pivot axis (68).

8. Apparatus according to Claim 1, **characterized in that** the first position of the securing element (11.1-11.3) defines an open position, in which the securing element (11.1-11.3) is located at a first horizontal distance from a connecting line between the supports (30.1, 30.2), as measured at right angles to said connecting line, wherein, in this first position, the load (40) is in a freed state in relation to the securing element (11.1-11.3).

9. Apparatus according to Claim 1 or 8, **characterized in that** the second position of the securing element (11.1-11.3) defines a transportation position, in which the securing element (11.1-11.3) is located at a second horizontal distance from a connecting line between the supports (30.1, 30.2), as measured at right angles to said connecting line, wherein the second distance is preferably smaller than the first distance, and wherein, in this second position, the load (40) is retained in the loading space (70) of the vehicle (3) by the securing element (11.1-11.3).

10. Apparatus according to one of Claims 1 to 9, **characterized in that**, in the first position, the securing element (11.1-11.3) is spaced apart vertically in relation to the second position.

11. Apparatus according to one of Claims 1 to 10, **characterized in that**, in its second position, the securing element (11.1-11.3) subjects the load (40) to a force.

12. Apparatus according to one of Claims 1 to 11, **characterized in that** the apparatus (1) comprises at least four arms (13.1-13.4) and at least two securing elements (11.1-11.3), which are arranged such that the at least two securing elements (11.1-11.3) are mounted in a pivotable manner on the arms (13.1-13.4), between the supports (30.1, 30.2) .

13. Vehicle (3), in particular a trailer, comprising an apparatus according to one of Claims 1 to 12.

14. Method for securing a load (40) in a loading space (70) of a vehicle (3), using an apparatus (1) for securing a load (40) in a loading space (70), in particular an apparatus (1) according to one of Claims 1 to 12, wherein at least one securing element (11.1-11.3) is shifted from a first position to a second position, in order for the load (40) to be retained within the loading space (70), wherein the apparatus (1) comprises at least two supports (30.1, 30.2) and at least two arms (13.1-13.4), wherein the at least two arms (13.1-13.4) are each mounted in a pivotable manner on a support (30.1, 30.2) and the securing element (11.1-11.3) is mounted in a pivotable manner between the two arms (13.1-13.4), and wherein the pivotable mounting allows the securing element (11.1-11.3) to be moved from its first position into its second position and back.

## Revendications

1. Dispositif (1) d'arrimage latéral d'un chargement (40) dans un espace de chargement (70) d'un véhicule (3), en particulier d'une remorque, comportant l'espace de chargement (70) et au moins un élément d'arrimage (11.1-11.3) pour l'arrimage du chargement (40) dans l'espace de chargement (70), dans lequel l'élément d'arrimage (11.1-11.3) est déplaçable d'une première position à une deuxième position, pour retenir le chargement (40), dans lequel la deuxième position de l'élément d'arrimage (11.1-11.3) se trouve à l'intérieur de l'espace de chargement (70) et l'élément d'arrimage (11.1-11.3) est déplaçable à partir d'une région de bord de l'espace de chargement (70) vers l'intérieur en direction du centre de l'espace de chargement (70) dans la deuxième position de l'élément d'arrimage (11.1-11.3), **caractérisé en ce que** le dispositif (1) comporte au moins deux montants (30.1, 30.2) et au moins deux bras (13.1-13.4), les au moins deux bras (13.1-13.4) étant respectivement montés pivotants sur un montant (30.1, 30.2) et l'élément d'arrimage (11.1-11.3) étant monté pivotant entre les deux bras (13.1-13.4) et l'élément d'arrimage (11.1-11.3) pouvant être déplacé de sa première position à sa deuxième position et inversement au moyen du montage pivotant.

2. Dispositif selon la revendication 1, **caractérisé par** un toit (50) pour le recouvrement du chargement (40).

3. Dispositif selon la revendication 2, **caractérisé par** un mécanisme de réglage horizontal, à l'aide duquel le toit (50) est déplaçable verticalement par rapport aux montants (30.1, 30.2).

4. Dispositif selon la revendication 3, **caractérisé en ce que** le dispositif (1) comporte un entraînement, de préférence un entraînement hydraulique, pour le réglage des bras (13.1-13.4).

5. Dispositif selon la revendication 4, **caractérisé en ce que** l'entraînement peut être commandé sans fil.

6. Dispositif selon la revendication 4 ou 5, **caractérisé en ce que** l'entraînement comporte un cylindre d'entraînement (64) et le dispositif (1) comporte un mécanisme de transmission (60) pour la transmission d'une force produite par le cylindre d'entraînement (64) à l'élément d'arrimage (13.1-13.4).

7. Dispositif selon la revendication 6, **caractérisé en ce que** le mécanisme de transmission (60) est réalisé sous forme de tringlerie à genouillère (60), laquelle comporte un premier élément (66) et un deuxième élément (67), le premier élément (66) étant monté sur l'un des au moins deux montants (30.1, 30.2) de manière pivotante autour d'un premier axe de pivotement (63) et le premier élément (66) étant monté sur le deuxième élément (67) de manière pivotante autour d'un deuxième axe de pivotement (68), tandis que le deuxième élément (67) est monté sur l'un des au moins deux bras (13.1-13.4) de manière pivotante autour d'un troisième axe de pivotement (69) et une extrémité libre d'une tige de piston (65) du cylindre d'entraînement (64) est également montée sur le premier élément (66) et sur le deuxième élément (67) de manière pivotante autour du deuxième axe de pivotement (68).

8. Dispositif selon la revendication 1, **caractérisé en ce que** la première position de l'élément d'arrimage (11.1-11.3) définit une position ouverte dans laquelle l'élément d'arrimage (11.1-11.3) se trouve à une première distance horizontale, mesurée perpendiculairement à une ligne de liaison entre les montants (30.1, 30.2), de la ligne de liaison, le chargement (40) étant libéré par l'élément d'arrimage (11.1-11.3) dans cette première position.

9. Dispositif selon la revendication 1 ou 8, **caractérisé en ce que** la deuxième position de l'élément d'arrimage (11.1-11.3) définit une position de transport dans laquelle l'élément d'arrimage (11.1-11.3) se trouve à une deuxième distance horizontale, mesurée perpendiculairement à une ligne de liaison entre les montants (30.1, 30.2), de la ligne de liaison, la deuxième distance étant de préférence inférieure à la première distance et le chargement (40) étant retenu par l'élément d'arrimage (11.1-11.3) dans l'espace de chargement (70) du véhicule (3) dans cette deuxième position.

10. Dispositif selon l'une des revendications 1 à 9, **caractérisé en ce que** l'élément d'arrimage (11.1-11.3) est espacé verticalement dans la première position par rapport à la deuxième position.

11. Dispositif selon l'une des revendications 1 à 10, **caractérisé en ce que** l'élément d'arrimage (11.1-11.3) agit par une force sur le chargement (40) dans sa deuxième position.

12. Dispositif selon l'une des revendications 1 à 11, **caractérisé en ce que** le dispositif (1) comporte au moins quatre bras (13.1-13.4) et au moins deux éléments d'arrimage (11.1-11.3) qui sont disposés de telle sorte que les au moins deux éléments d'arrimage (11.1-11.3) sont montés pivotants sur les bras (13.1-13.4) entre les montants (30.1, 30.2).

13. Véhicule (3), en particulier remorque, comportant un dispositif selon l'une des revendications 1 à 12.

14. Procédé d'arrimage d'un chargement (40) dans un espace de chargement (70) d'un véhicule (3), à l'aide d'un dispositif (1) d'arrimage d'un chargement (40) dans un espace de chargement (70), en particulier d'un dispositif (1) selon l'une des revendications 1 à 12, dans lequel au moins un élément d'arrimage (11.1-11.3) est déplacé d'une première position à une deuxième position, pour retenir le chargement (40) à l'intérieur de l'espace de chargement (70), dans lequel le dispositif (1) comporte au moins deux montants (30.1, 30.2) et au moins deux bras (13.1-13.4), dans lequel les au moins deux bras (13.1-13.4) sont respectivement montés pivotants sur un montant (30.1, 30.2) et l'élément d'arrimage (11.1-11.3) est monté pivotant entre les deux bras (13.1-13.4) et dans lequel l'élément d'arrimage (11.1-11.3) est déplacé de sa première position à sa deuxième position et inversement au moyen du montage pivotant.
